Europäisches Patentamt

European Patent Office

Office européen des brevets

(11) Veröffentlichungsnummer: **0 039 942**
**B1**

# EUROPÄISCHE PATENTSCHRIFT

(45) Veröffentlichungstag der Patentschrift:
22.08.84

(51) Int. Cl.³: **G 03 B  3/10,** G 03 B  13/20,
G 02 B  7/11

(21) Anmeldenummer: 81103602.9

(22) Anmeldetag: 11.05.81

(54) Spiegelreflexkamera mit im Bereich des Sucherokulars eingebautem optoelektrischen Entfernungsmesser.

(30) Priorität: 14.05.80  DE 3018564

(43) Veröffentlichungstag der Anmeldung:
18.11.81 Patentblatt 81/46

(45) Bekanntmachung des Hinweises auf die Patenterteilung:
22.08.84 Patentblatt 84/34

(84) Benannte Vertragsstaaten:
BE FR GB IT NL

(56) Entgegenhaltungen:
DE - A - 2 703 290
DE - A - 2 813 913
DE - A - 2 838 647
DE - B - 2 639 625

Patents Abstract of Japan Vol. 1, No. 153, 8 Dezember
1977 page 8165E77

(73) Patentinhaber: SIEMENS AKTIENGESELLSCHAFT,
Berlin und München Wittelsbacherplatz 2,
D-8000 München 2 (DE)

(72) Erfinder: Grassl, Hans-Peter, Obere Bahnhofsstrasse 12,
D-8011 Zorneding (DE)

## Beschreibung

Die Erfindung bezieht sich auf eine Spiegelreflexkamera mit einem optoelektronischen Entfernungsmesser nach dem Oberbegriff des Patentanspruchs 1.

Eine fotografische Kamera dieser Art, bei der die beiden Abbildungen, die von einem in seiner Entfernung zu bestimmenden Gegenstand benötigt werden, über zwei Teilpupillen des Kameraobjektivs abgeleitet werden, ist aus der DE-A-2 813 914 bekannt. Anordnungen zur optoelektronischen Entfernungsmessung mit zwei linearen Bildsensoren sind darüber hinaus in der DE-A-2 813 913 und den DE-A-2 838 647, DE-A-2 936 491 und DE-A-2 936 535 beschrieben. Hierbei werden die beiden Abbildungen des Gegenstandes über optische Einrichtungen abgeleitet, die z.B. aus zwei Teilpupillen eines Objektivs oder aus zwei die gleichen Funktionen erfüllenden, getrennten Objektiven bestehen können.

Wie aus den genannten Literaturstellen und älteren Anmeldungen hervorgeht, bestehen die Sensorelemente aus Fotodioden, MIS-Kondensatoren oder aus Fotodioden, denen jeweils MIS-Kondensatoren zugeordnet sind. Innerhalb einzelner Zeitintervalle, die auch als Integrationszeiten bezeichnet werden, sammeln sich in den Sensorelementen jeweils optisch erzeugte Ladungsträger an, aus denen dann die Sensorsignale abgeleitet werden. Bei den Anordnungen nach den DE-A-2 813 913 und 2 813 914 erfolgt eine analoge Verarbeitung der Sensorsignale, während sich die Anordnungen nach den weiterhin genannten älteren Patentanmeldungen davon insofern unterscheiden, als die Sensorsignale vor ihrer weiteren Verarbeitung zunächst digitalisiert werden.

Aus der DE-A-2 703 290 ist eine Einrichtung bei einer Spiegelreflexkamera bekannt, bei der die Trennung von Sucher- und Entfernungsmesserstrahlengang durch eine teildurchlässige Fläche an einem Umlenkprisma erfolgt. Dies bedeutet einen Lichtverlust für beide Strahlengänge.

Der Erfindung liegt die Aufgabe zugrunde, zwei auf die linearen Bildsensoren zu projizierende Zeilenausschnitte, die von einem in seiner Entfernung zu bestimmenden Gegenstand abgeleitet werden, in möglichst raumsparender und verlustarmer Weise den beiden Bildsensoren individuell zuzuordnen, ohne hierdurch die Funktionen der Kamera nennenswert zu beeinträchtigen. Diese Aufgabe wird durch die im Patentanspruch 1 gekennzeichneten Merkmale gelöst.

Der mit der Erfindung erzielbare Vorteil besteht insbesondere darin, dass die für die Entfernungsmessung zusätzlich vorgesehenen optischen Elemente die übrigen Kamerafunktionen in keiner Weise beeinträchtigen oder verändern. Nur im Bereich des Sucherokulars sind Abänderungen des konventionellen Kameraaufbaues notwendig, wodurch jedoch keine Beeinträchtigung des Sucherbildes entsteht.

Bevorzugte Ausgestaltungen und Weiterbildungen der Erfindung sind in den Patentansprüchen 2 bis 14 angegeben.

Die Erfindung wird nachfolgend anhand der Zeichnung näher erläutert. Dabei zeigt:

Fig. 1 eine nach der Erfindung ausgebildete Spiegelreflexkamera,

Fig. 2 eine Draufsicht auf den Strahlengang der Kamera nach Fig. 1 und

Fig. 3 eine perspektivische Darstellung einiger optischer Komponenten der Kamera nach Fig. 1.

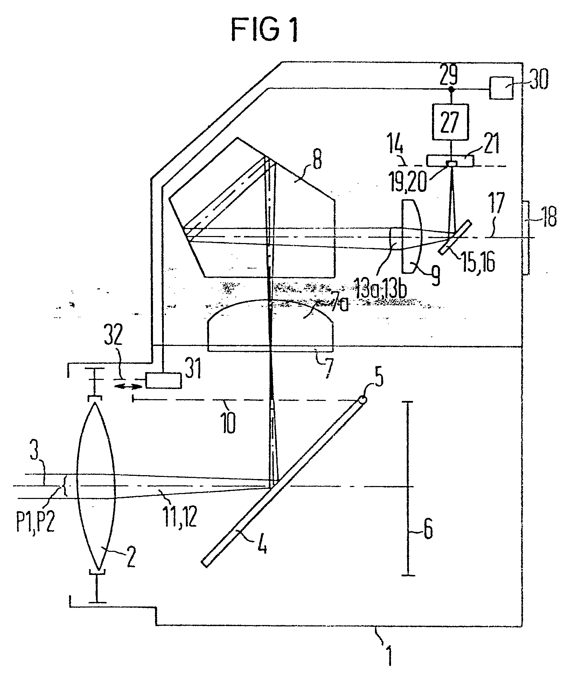

In Fig. 1 ist eine Spiegelreflexkamera mit einem Gehäuse 1 und einem Objektiv 2 schematisch dargestellt. Ein durch das Objektiv 2 eintretendes, von einem Gegenstand abgeleitetes Strahlenbündel ist durch den mit der optischen Achse zusammenfallenden, strichpunktiert dargestellten Mittelpunktsstrahl 3 angedeutet. Ein Klappspiegel 4, der um eine Achse 5 drehbar gelagert ist, kann in die eingezeichnete Lage gebracht werden, in der er sich im Strahlengang zwischen dem Objektiv 2 und einer Bildebene 6 befindet, in der z.B. ein fotografischer Film oder bei einer elektronischen Kamera ein zweidimensionaler Bildsensor vorgesehen sind. Dabei lenkt er das eintretende Strahlenbündel 3 in Richtung auf eine Suchereinstellscheibe (Mattscheibe) 7 um. Diese befindet sich in einer zur Bildebene 6 äquivalenten Ebene, so dass das Motivbild auf sie scharf abgebildet wird. Das Motivbild wird über ein Pentaprisma 8 auf ein Sucherokular 9 reflektiert, in dem es dann aufrecht und seitenrichtig erscheint. Hinter der Einstellscheibe 7 befindet sich eine Feldlinse 7a, die die Pupille des Objektivs 2 auf eine Ebene in der Nähe des Sucherokulars 9 abbildet. Nach der Motivsuche und dem Einstellen des Abstandes des Objektivs 2 von der Bildebene 6 auf einen solchen Wert, dass der ausgewählte Gegenstand auf die Bildebene scharf abgebildet wird, wird dann der Klappspiegel 4 in die gestrichelt angedeutete Lage 10 gebracht, so dass das Strahlenbündel 3 zur Bildebene 6 gelangt und den fotografischen Film belichtet bzw. durch einen Bildsensor optoelektronisch abgetastet wird.

Zur Entfernungsmessung werden zwei Teilstrahlenbündel 11, 12 benötigt, die durch zwei Teilpupillen P1, P2 des Objektivs 2 eintreten. In der Darstellung nach Fig. 1 decken sie sich, da sie vor bzw. hinter der durch die optische Achse gehenden Zeichenebene liegen. Definiert werden sie als jene Teilstrahlenbündel, die zwei an das Sucherokular 9 angefügte Teile 13a, 13b von fokussierenden Linsen durchdringen. Diese Linsenteile 13a, 13b bewirken, dass jedes der Teilstrahlenbündel 11, 12 auf einen anderen Punkt einer Ebene 14 scharf abgebildet wird. Durch Umlenkspiegel 15, 16 werden die Bündel 11, 12 jeweils um 90° umgelenkt, damit sie von dem durch die Linie 17 angedeuteten Strahlengang des Motivbildes, der zur Einblicköffnung 18 des Sucherokulars 9 führt, getrennt werden. Zwei lineare Bildsensoren 19, 20 sind auf einem Trägerkörper 21 so angeordnet, dass sich ihre Sensorelemente in einer gemeinsamen Sensorzeile befinden, die in Fig. 1 senkrecht zur Zeichenebene verläuft. Sie liegen weiterhin in der Ebene 14, auf die der Gegenstand bei richtiger Einstellung des Objektivs 2 zweimal scharf abgebildet wird, und zwar einmal über den Linsenteil 13a und einmal über den Linsenteil 13b. Der Trägerkörper 21 besteht zweckmässigerweise aus einem dotierten Halbleiterkörper, in den die einzelnen Sensorelemente integriert sind.

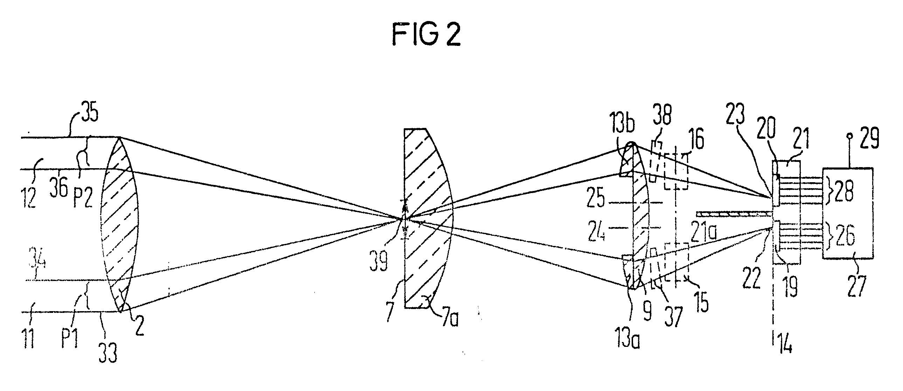

In Fig. 2 ist der eingeebnete Strahlengang der Teilstrahlenbündel 11 und 12 in Draufsicht dargestellt, wobei die durch den Klappspiegel 4, das Pentaprisma 8 und die Umlenkspiegel 15, 16 bewirkten Umlenkungen nicht berücksichtigt sind. Aus Fig. 2 ist entnehmbar, dass das den Linsenteil 13a durchdringende Teilstrahlenbündel 12 auf einen Punkt 22 der Ebene 14 fokussiert wird. Wäre der Linsenteil 13a nicht vorhanden, so würde das Bündel 12 von dem Sucherokular 9 so gebrochen werden, dass es wieder achsparallel weiterlaufen würde. In analoger Weise bewirkt der Linsenteil 13b eine Fokussierung des Teilstrahlenbündels 11 auf den Punkt 23 in der Ebene 14. Der gegenseitige Abstand der Punkte 22 und 23 wird dadurch erreicht, dass der Linsenteil 13a einen Teil einer Sammellinse darstellt, deren Achse durch die Linie 24 angedeutet ist, während der Linsenteil 13b aus einem Teil einer Sammellinse besteht, deren Achse durch 25 angegeben ist.

Die in Fig. 2 nebeneinanderliegenden Bildsensoren 19 und 20 sind in dem Trägerkörper 21, dessen eine Grenzfläche in der Ebene 14 liegt, so angeordnet, dass die Punkte 22 und 23 jeweils im Bereich eines ihrer Sensorelemente liegen. Jeder der Bildsensoren enthält eine Reihe von Sensorelementen, die jeweils aus Fotodioden, MIS-Kondensatoren oder aus Fotodioden und diesen zugeordneten MIS-Kondensatoren bestehen. Der Aufbau und die Arbeitsweise solcher Bildsensoren sind beispielsweise in der deutschen Patentanmeldung P 2 936 491.8 beschrieben. Die Ausgänge der Sensorelemente des Bildsensors 19 sind mit Paralleleingängen 26 einer Auswerteschaltung 27 verbunden, während die Ausgänge der Sensorelemente des Bildsensors 20 an Paralleleingänge 28 von 27 geführt sind. Ein Ausgang 29 ist mit einer die Entfernung des Gegenstandes anzeigenden Vorrichtung 30 beschaltet. Andererseits kann der Ausgang 29 in vorteilhafter Weise mit einer Fokussiereinrichtung 31 verbunden sein, die in Abhängigkeit von einem an 29 abgreifbaren Signal den zur Fokussierung benötigten Abstand des Objektivs 2 von der Bildebene 6 mittels eines durch die gestrichelte Linie 32 angedeuteten Betätigungsorgans einstellt. Die Auswerteschaltung 27 kann mit Vorteil in den dotierten Halbleiterkörper 21 integriert sein.

Zwei achsparallele Strahlen 33 und 34, die durch die Teilpupille P1 einfallen, treffen sich in dem Bildpunkt 23 der Ebene 14. Ebenso bilden sich achsparallele Strahlen 35 und 36, die durch P2 eintreten, in den Punkt 22 der Ebene 14 ab. Die Punkte 22 und 23 entsprechen dabei einem Gegenstandspunkt, der sich in einer sehr grossen Entfernung von der Kamera 1 befindet. Ist seine Entfernung geringer, so gehen von ihm Lichtstrahlen aus, die sich, soweit sie durch die Teilpupille P1 eintreten, in einem Bildpunkt der Ebene 14 treffen, der um den Abstand x in Fig. 2 unterhalb des Punktes 23 liegt.

Andererseits treffen sich Lichtstrahlen, die von ihm ausgehen und durch P2 einfallen, in einem Bildpunkt der Ebene 14, der in Fig. 2 um den Abstand y oberhalb des Punktes 22 liegt. Die Summe x + y ergibt dabei ein Mass für die Entfernung des Gegenstandes von der Kamera 1. Betrachtet man eine ganze mittels der Bildsensoren 19 und 20 abgetastete Zeile der aufzunehmenden Szene, so ist eine dem Wert x + y entsprechende relative Verschiebung zwischen einander vergleichbaren, die Bildsensoren beaufschlagenden Helligkeitsverläufen vorhanden.

Der Wert der relativen Verschiebung x + y wird in der Auswerteschaltung 27 in der Weise ermittelt, dass die Sensorsignale des einen Bildsensors mit den Sensorsignalen des anderen Bildsensors in Abhängigkeit von unterschiedlichen Positionsverschiebungen hinsichtlich ihrer Korrelation überprüft werden. Die Positionsverschiebung, bei der die maximale Korrelation auftritt, entspricht dem gesuchten Wert x + y. Am Ausgang 29 ist eine elektrische Grösse abgreifbar, die diesem Wert und damit der Entfernung des Gegenstandes entspricht. Die Arbeitsweise einer solchen Auswerteschaltung ist beispielsweise in der deutschen Patentanmeldung P 2 936 491.8 oder in den DE-OS-2 813 913 und 2 813 914 beschrieben.

Insbesondere bei einer Verwendung der Fokussiereinrichtung 31 braucht das Objektiv 2 aber nicht vor jeder Entfernungsmessung oder Scharfeinstellung auf die Entfernung «Unendlich» eingestellt zu werden. Ausgehend von der jeweiligen Stellung des Objektivs stellt dann der Wert x + y ein Mass dar für die Abweichung der Entfernung des Gegenstandes von der Entfernung, auf die das Objektiv 2 gerade eingestellt ist. Die an 29 abgreifbare elektrische Grösse entspricht dabei der erforderlichen Objektivverstellung, mit der eine scharfe Abbildung des Gegenstandes erreicht wird.

Sind die Linsenteile 13a und 13b als Teilstücke von Sammellinsen ausgebildet, deren optische Achsen nicht den Linien 24 und 25 entsprechen, sondern näher beieinander oder weiter voneinander entfernt sind, so können die hierdurch bedingten Abstandsänderungen zwischen den Punkten 22 und 23 durch eingefügte Umlenkelemente, insbesondere Umlenkprismen 37, 38 zum Vergrössern dieses Abstands oder von um 180° gedrehten Umlenkprismen zum Verringern desselben, kompensiert werden. An die Stelle der Linsenteile 13a und 13b können auch vollständige Sammellinsen oder Objektive mit der Funktion von Sammellinsen treten, deren Durchmesser wesentlich kleiner sind als der Durchmesser des Sucherokulars 9, so dass sie die Teilstrahlenbündel 11 und 12 für sich definieren. Auch in diesem Fall können Umlenkelemente 37, 38 vorgesehen werden, die dann den resultierenden Abstand zwischen den Punkten 22 und 23 mitbestimmen.

Durch Einfügung einer Trennblende 21a zwi-

schen die beiden Bildsensoren 19, 20 wird eine gute Trennung der durch die Teilpupillen P1 und P2 erhaltenen Bildinformationen erzielt.

Die Feldlinse 7a kann mit Vorteil als eine Fresnel'sche Linse ausgebildet sein, wobei aber ein innerhalb eines von den Bildsensoren 19, 20 abgetasteten Bildstreifens 39 liegender Teil der Linse nicht in einzelne Linsenzonen aufgeteilt ist. Weiterhin kann die Einstellscheibe 7 mattiert sein. Dabei ist es allerdings notwendig, im Bereich des Bildstreifens 39 die Mattierung auszusparen. Falls zur visuellen Fokussierungskontrolle in an sich bekannter Weise ein Mikroprismenraster auf der Oberfläche der Feldlinse 7a vorgesehen wird, muss auch dieses im Bereich des von den Bildsensoren 19 und 20 abgetasteten Bildstreifens 39 ausgespart werden.

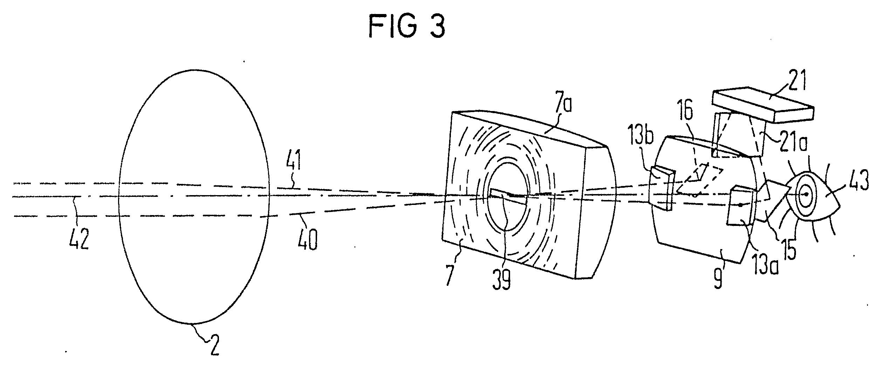

In Fig. 3 ist der bereits in Fig. 2 in Draufsicht gezeigte Strahlengang perspektivisch dargestellt. Der auszusparende Bereich 39 liegt, wie hieraus ersichtlich ist, parallel zu einer Ebene, die durch den Mittelpunktsstrahl 40 des Teilstrahlenbündels 11 und den Mittelpunktsstrahl 41 des Teilstrahlenbündels 12 geht. Mit 42 ist die optische Achse des ganzen Systems bezeichnet, die infolge der Einebnung des Strahlengangs in die optische Achse des Objektivs 2 geklappt ist. Mit 43 ist die Blickrichtung beim Betrachten des Sucherokulars 9 zum Zwecke einer Motivsuche angedeutet.

Anstelle des Klappspiegels 4 kann beispielsweise auch ein ortsfest angeordneter Strahlteiler, z.B. ein halbdurchlässiger Spiegel, vorgesehen sein, der den Strahlengang des Objektivs 2 in einen ersten, zur Bildebene 6 hin verlaufenden und in einen zweiten, zum Sucher 8, 9 hin verlaufenden Strahlengang aufteilt. Hierbei kann die Kamera auch als Laufbildkamera ausgebildet sein.

**Patentansprüche**

1. Spiegelreflexkamera mit einem optoelektronischen Entfernungsmesser, bei dem zwei lineare, jeweils eine Mehrzahl von Sensorelementen aufweisende Bildsensoren, zwei optische Einrichtungen zur Projektion von Ausschnitten einander entsprechender Zeilen zweier von einem Gegenstand erhaltener Abbildungen auf die Bildsensoren und eine Auswerteschaltung vorgesehen sind, wobei die Auswerteschaltung eine elektrische Grösse in Abhängigkeit von der seitlichen Verschiebung der Zeilenausschnitte gegeneinander bildet, wobei die optischen Einrichtungen aus zwei fokussierenden Linsen oder Linsenteilen bestehen, die Teilpupillen der Objektivpupille bestimmen, und wobei Teilstrahlenbündel, die diese Linsen oder Linsenteile durchdringen, die Abbildungen auf die Bildsensoren projizieren, dadurch gekennzeichnet, dass die Linsen oder Linsenteile (13a, 13b) seitlich neben dem Sucherstrahlengang des Sucherokulars (9) angeordnet sind und dass im weiteren Strahlengang der beiden Teilstrahlenbündel (11, 12) oder im Strahlengang des Sucherokulars (9), bei dem die Teilstrahlenbündel (11, 12) ausgespart sind, Umlenkelemente (15, 16) vorgesehen sind, die beide Strahlengänge voneinander trennen.

2. Spiegelreflexkamera nach Anspruch 1, dadurch gekennzeichnet, dass die Linsen oder Linsenteile (13a, 13b) an dem Sucherokular (9) befestigt sind.

3. Spiegelreflexkamera nach einem der vorhergehenden Ansprüche, dadurch gekennzeichnet, dass die Umlenkelemente aus Umlenkspiegeln (15, 16) und/oder Umlenkprismen (37, 38) bestehen.

4. Spiegelreflexkamera nach einem der vorhergehenden Ansprüche, dadurch gekennzeichnet, dass die Suchereinstellscheibe (7) als Fresnelsche Linse ausgebildet ist.

5. Spiegelreflexkamera nach Anspruch 4, dadurch gekennzeichnet, dass der Teil der Fresnellinse (7), der dem von den Bildsensoren (19, 20) abgetasteten Bildstreifen (39) entspricht, nicht in einzelne Linsenzonen aufgeteilt ist.

6. Spiegelreflexkamera nach einem der vorhergehenden Ansprüche, dadurch gekennzeichnet, dass die Feldlinse (7a) mit einem Mikroprismenraster versehen ist, das im Bereich des von den Bildsensoren (19, 20) abgetasteten Bildstreifens (39) ausgespart ist.

7. Spiegelreflexkamera nach einem der Ansprüche 9 bis 12, dadurch gekennzeichnet, dass die Suchereinstellscheibe (7) eine Mattierung aufweist, die im Bereich des von den Bildsensoren (19, 20) abgetasteten Bildstreifens (39) ausgespart ist.

8. Spiegelreflexkamera nach einem der vorhergehenden Ansprüche, dadurch gekennzeichnet, dass zwischen den Bildsensoren (19, 20) eine die Teilstrahlenbündel (11, 12) voneinander trennende Blende (21a) angeordnet ist.

9. Spiegelreflexkamera nach einem der vorhergehenden Ansprüche, dadurch gekennzeichnet, dass die Bildsensoren (19, 20) in einem dotierten Halbleiterkörper (21) integriert sind.

10. Spiegelreflexkamera nach Anspruch 9, dadurch gekennzeichnet, dass die Auswerteschaltung (27) in dem dotierten Halbleiterkörper (21) integriert ist.

11. Spiegelreflexkamera nach einem der vorhergehenden Ansprüche, dadurch gekennzeichnet, dass der Auswerteschaltung (27) eine die Entfernung des Gegenstandes anzeigende Vorrichtung (30) nachgeschaltet ist.

12. Spiegelreflexkamera nach einem der vorhergehenden Ansprüche, dadurch gekennzeichnet, dass der Auswerteschaltung (27) eine Fokussiereinrichtung (31) nachgeschaltet ist.

**Revendications**

1. Caméra réflex avec un télémètre optoélectronique, dans lequel sont prévus deux détecteurs d'image linéaires comportant chacun plusieurs éléments détecteurs, deux dispositifs optiques pour projeter sur les détecteurs d'image des sections de lignes, correspondant entre elles, de deux images obtenues d'un même objet, ainsi qu'un circuit d'évaluation, du type dans lequel le circuit d'évaluation forme une grandeur électrique en fonction du décalage latéral réciproque des sections de lignes, dans laquelle les dispositifs optiques sont constitués par deux lentilles ou portions de lentilles de mise au point qui déterminent des pupilles de l'objectif et dans laquelle les faisceaux de rayons partiels qui traversent ces lentilles ou portions de lentilles projettent les images sur les détecteurs d'image, caractérisée par le fait que les lentilles ou portions de lentilles (13a, 13b) sont disposées latéralement de la trajectoire du faisceau de visée de l'oculaire de visée, et que dans la poursuite de la trajectoire des rayons des deux faisceaux partiels (11, 12) ou dans la trajectoire des rayons de l'oculaire du viseur (9), dans laquelle les faisceaux du rayons partiels (11, 12) présentent une partie réservée, sont prévus deux éléments de déviation (15, 16) qui séparent entre eux les deux trajectoires de rayons.

2. Caméra réflex selon la revendication 1, caractérisée par le fait que les lentilles ou portions de lentilles (13a, 13b) sont fixées à l'oculaire de visée (9).

3. Caméra réflex selon l'une des revendications précédentes, caractérisée par le fait que les éléments de déviation sont constitués par des miroirs de déviation (15, 16) et/ou des prismes de déviation (37, 38).

4. Caméra réflex selon l'une des revendications précédentes, caractérisée par le fait que le disque de mise au point du viseur est réalisé sous la forme d'une lentille de Fresnel.

5. Caméra réflex selon la revendication 4, caractérisée par le fait que la partie de la lentille de Fresnel (7) qui correspond aux bandes de l'image (39) qui sont explorées par les détecteurs d'image (19, 20) n'est pas subdivisée en zones de lentille individuelles.

6. Caméra réflex selon l'une des revendications précédentes, caractérisées par le fait que la lentille de champ (7a) n'est pas pourvue d'un réseau de micro-prismes qui en est dépourvu dans la zone de la bande d'image (39) qui est balayée par les détecteurs d'image (19, 20).

7. Caméra réflex selon l'une des revendications 9 à 12, caractérisée par le fait que le disque de réglage de visée (7) présente un dépoli à l'exception de la zone de la bande d'image (39) qui est balayée par les détecteurs d'image (19, 20).

8. Caméra réflex selon l'une des revendications précédentes, caractérisée par le fait qu'entre les détecteurs d'image (19, 20) est disposé un diaphragme (21a) qui sépare entre eux les faisceaux de rayons partiels (11, 12).

9. Caméra réflex selon l'une des revendications précédentes, caractérisée par le fait que les détecteurs d'image (19, 20) sont intégrés dans un corps semiconducteur dopé.

10. Caméra réflex selon la revendication 9, caractérisée par le fait que le circuit d'évaluation (27) est intégré dans le corps semiconducteur dopé (21).

11. Caméra réflex selon l'une des revendications précédentes, caractérisée par le fait qu'en aval du circuit d'évaluation (27) est monté un dispositif (30) qui indique la distance de l'objet.

12. Caméra réflex selon l'une des revendications précédentes, caractérisée par le fait qu'en aval du circuit d'évaluation (27) est prévu un dispositif de mise au point (31).

## Claims

1. A reflex camera having an opto-electronic distance meter, wherein are provided two linear image sensors, each having a respective plurality of sensor elements, two optical devices for projecting portions of mutually corresponding lines of two representations received from an object onto the image sensors, and an evaluating circuit, where the evaluating circuit forms an electrical magnitude in dependence upon the lateral displacement of the line portions relative to one another, where the optical devices consist of two focussing lenses or lens components which determine the partial pupils of the objective pupil, and where partial beams passing through the lenses or lens components project representations onto the image sensors, characterised in that the lenses or lens components (13a, 13b) are laterally arranged beside the viewfinder light path of the eyepiece (9), and that in the further path of the two partial beams (11, 12) or in the path of the eyepiece (9), wherein the partial beams (11, 12) are open, there are arranged deflecting elements (15, 16) which separate both paths from one another.

2. A reflex camera as claimed in Claim 1, characterised in that the lenses or lens components (13a, 13b) are secured to the eyepiece (9).

3. A reflex camera as claimed in one of the preceding Claims, characterised in that the deflecting elements consist of deflecting mirrors (15, 16) and/or deflecting prisms (37, 38).

4. A reflex camera as claimed in one of the preceding Claims, characterised in that the selector adjustment disc (7) is designed as a Fresnel lens.

5. A reflex camera as claimed in Claim 4, characterised in that the part of the Fresnel lens (7) which corresponds to the image strip (39) scanned by the image sensors (19, 20) is not divided into individual lens zones.

6. A reflex camera as claimed in one of the preceding Claims, characterised in that the field lens (7a) is provided with a microprism raster which is open in the region of the image strip (39) scanned by the image sensors (19, 20).

7. A reflex camera as claimed in one of Claims 9 to 12, characterised in that the selector adjustment disc (7) has a frosting which is recessed in the region of the image strip (39) scanned by the image sensors (19, 20).

8. A reflex camera as claimed in one of the preceding Claims, characterised in that a diaphragm (21a) separating the partial beams (11, 12) from one another is arranged between the image sensors (19, 20).

9. A reflex camera as claimed in one of the preceding Claims, characterised in that the image sensors (19, 20) are integrated in a doped semiconductor body (21).

10. A reflex camera as claimed in Claim 9, characterised in that the evaluating circuit (27) is integrated in the doped semiconductor body (21).

11. A reflex camera as claimed in one of the preceding Claims, characterised in that the evaluating circuit (27) is followed by a device (30) indicating the distance of the object.

12. A reflex camera as claimed in one of the preceding Claims, characterised in that the evaluating circuit (27) is followed by a focussing device (31).

1/3

FIG 1

FIG 2

FIG 3

0 039 942